# EUROPÄISCHE PATENTSCHRIFT

(11) **EP 0 677 406 B1**
(45) Veröffentlichungstag und Bekanntmachung des Hinweises auf die Patenterteilung: **23.07.1997**
(21) Anmeldenummer: 95105225.7
(22) Anmeldetag: 07.04.1995
(51) Int. Cl.: B60D 1/52

(54) **Abnehmbare Anhängerkupplung**
Dismountable trailer coupling
Attelage de remorque détachable

(30) Priorität: 12.04.1994 DE 4412513
(43) Veröffentlichungstag der Anmeldung: 18.10.1995
(73) Patentinhaber: PEKA-Fahrzeugbau GmbH & Co. KG, 76185 Karlsruhe (DE)
(72) Erfinder: Rimmelspacher, Bernhard, Dipl.-Ing., D-76287 Rheinstetten (DE)
(74) Vertreter: Schuster, Gregor, Dipl.-Ing.

(56) Entgegenhaltungen:
- EP-A- 0 151 099
- EP-A- 0 219 412
- EP-A- 0 332 759
- BE-A- 1 001 829
- DE-C- 863 001

## Beschreibung

Die Erfindung betrifft eine abnehmbare Anhängerkupplung, insbes. für Personenkraftwagen, mit am Fahrzeug bevorzugt verdeckt zu montierendem Halteteil für die lösbare Befestigung des Schaftes einer mit Kupplungskugel versehenen Kugelstange, wobei der Schaft eine Nut aufweist zur Aufnahme eines in der Öffnung des Halte- bzw. Aufnahmeteils befindlichen Haltestiftes und einen parallel zur Schaftachse verschiebbaren Verriegelungsbolzen, der beim Verdrehen des eingeführten Schaftes um seine Längsachse unter Federbelastung selbständig in eine außermittige Ausnehmung des Halteteils eingreift.

Eine derartige Anordnung ist aus der DE-PS 40 09 530 bekannt geworden. Auch dort erfolgt die Arretierung des Schaftes im Aufnahme- bzw. Halteteil durch ein Verdrehen. Doch haften der bekannten Anordnung mehrere Nachteile an: Zum ersten ist der Schaft bezüglich seiner mechanischen Festigkeit, insbes. seiner Biegefestigkeit, durch Längs- und Querbohrungen einschließlich Schlitz ganz erheblich geschwächt.

Zum zweiten bedeuten diese Bohrungen fertigungstechnisch einen relativ hohen Aufwand. Schließlich scheint der Verdrehwinkel von nur 30 % zu gering, um beim Auftreten größerer Kräfte im Anhängerbetrieb eine sichere Arretierung zu gewährleisten, da die Geometrie bezüglich eines ausreichenden Hintergreifens des das Halteteil quer durchsetzenden Bolzens nicht günstig gewählt ist.

Aus der Fig. 10 der canadischen Patentanmeldung 2 046 311 ist eine umlaufende Ringnut 6' bekanntgeworden, in die ein außermittig angeordnetes Rastglied 31' tangential nach Passieren eines ebenfalls seitlich am Schaft abgetragenen Segments 18' eingreift. Auch diese Geometrie ist unter fertigungstechnischen und mechanischen Gesichtspunkten nicht zufriedenstellend.

Der Erfindung liegt daher die Aufgabe zugrunde, vorstehende Problematik zu lösen und die genannten Nachteile des Standes der Technik zu vermeiden, d.h. eine kostengünstig herstellbare Konzeption zu finden bei optimaler mechanischer Festigkeit und Sicherheit im Betriebszustand.

Die vorstehende Aufgabe wird bei einer Anhängerkupplung der eingangs genannten Art mittels der Merkmale des kennzeichnenden Teils von Patentanspruch 1 gelöst.

Erfindungswesentlich ist dabei in erster Linie die Kombination der fertigungstechnisch günstig zu realisierenden Winkelnut des Schaftes mit dem im Halte- bzw. Aufnahmeteil befindlichen feststehenden Haltestift.

Einen weiteren kombinatorischen Vorteil liefert die Verlegung des Verriegelungsbolzen nach außerhalb des Schaftes, womit die Schwächung des Schaft-Querschnitts entfällt.

Weitere vorteilhafte Ausgestaltungen sind Gegenstand der Unteransprüche. Dort sind insbes. bevorzugte geometrische Einzelmaßnahmen beschrieben, um eine sich im Betriebszustand stets selbst-nachstellende Arretierung des Schaftes zu gewährleisten Weiterhin werden optimale Abmessungen der Winkelnut angegeben.

Im folgenden soll die Erfindung anhand einer Zeichnung näher beschrieben werden, aus der sich weitere Vorteile und Merkmale der Erfindung entnehmen lassen.

Es zeigen
- Fig. 1: die Kugelstange und das fahrzeugseitig angebrachte Halte- bzw. Aufnahmeteil in perspektivischer Darstellung;
- Fig. 2: die Kugelstange in Entnahme- oder Einführungsposition;
- Fig. 3: die Kugelstange in Betriebsposition.

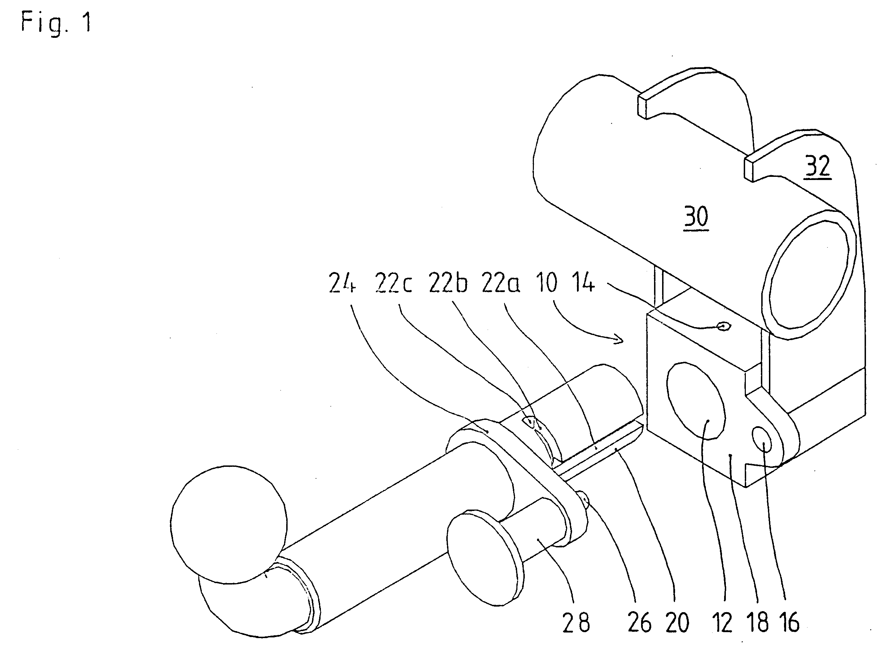

Im einzelnen betrachtet zeigt Fig. 1 im rechten Bildausschnitt das Halteteil 10 unterhalb eines zum Fahrzeugheck gehörenden Anschlußrohres 30, mit dem es über zwei Verbindungsbleche 32 fest verbunden, insbes. verschweißt ist. Links davon sieht man die Kugelstange mit Schaft 20. Er weist eine Winkelnut 22 auf, deren einer Schenkel 22a am Schaftende beginnt, sich in der Regel 3 bis 4 cm coaxial erstreckt, um dann unter Bildung eines rechten Winkels in den radial verlaufenden zweiten Schenkel 22b überzugehen. Tiefe und Breite der Winkelnut 22 sind auf die Form des Haltestiftes 14 abgestimmt, die Länge der Nut auf die Tiefe des Halteteils 10 und die Position des darin befindlichen Haltestiftes 14.

Dieser Haltestift 14 kann als Rundbolzen ausgebildet und in eine zur Öffnung 12 führenden Bohrung eingesetzt bzw. eingeschweißt sein. Von der Handhabung her empfiehlt es sich, den Haltestift 14 von oben in die Öffnung zu setzen und die Verriegelungsrichtung des Schaftes 20 im Uhrzeigersinn festzulegen, womit dann auch die in allen 3 Figuren gleichsinnig gezeigte Lage der Winkelnut 22 - auch in Bezug auf den Kugelkopf - festgelegt ist.

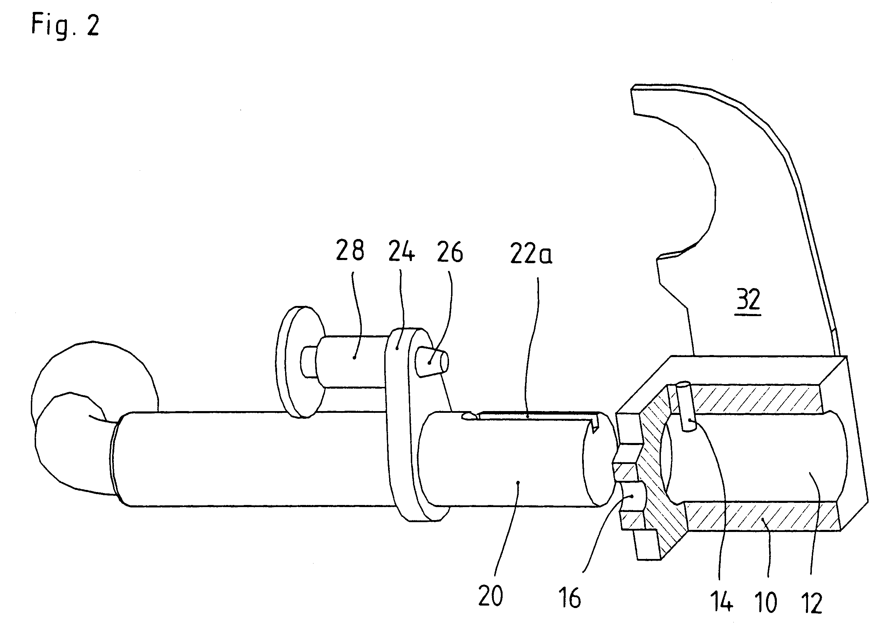

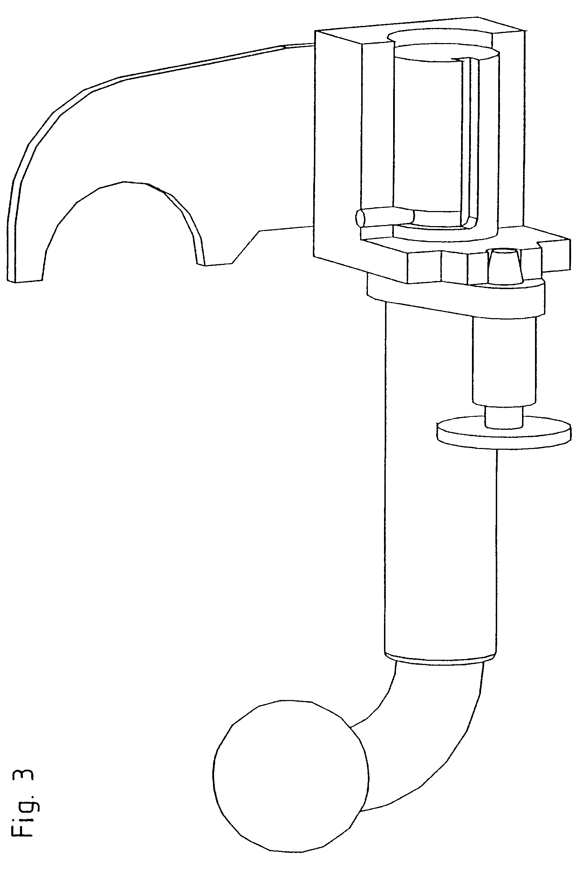

Eingeschoben bzw. entnommen wird der Schaft 20 in der in Fig.2 gezeigten Position, wobei der Nutschenkel 22a nach oben weist. Zur Herstellung der Arretier- und Betriebsposition wird dann um ca. 90° verschwenkt bzw. verdreht, um die in Fig. 3 gezeigte Position zu erreichen.

Dort erreicht dann der in Fig. 1 nur andeutbare Haltestift 14 den Bereich der Verspannposition 22c, und das Verbindungsstück 24 liegt an der Vorderseite 18 des Halteteils 10 an.

Der Verriegelungsbolzen 26 soll bevorzugt in seiner Verriegelungsposition gesichert sein (nicht gezeichnet).

Figur 2 zeigt die Position des Haltestiftes 14 deutlich. Soll die Kugelstange eingeschoben und arretiert werden, so wird sie nun von links nach rechts eingeschoben, wobei der Haltestift 14 entlang der im Bild oben liegenden Nut 22a gleitet bis der Verriegelungsbolzen 26 gegen eine in den Figuren nicht gezeigte an die Vorderseite des Halteteils 10 angeschweißte Kulisse stößt, und bei weiterer Bewegung nach rechts im Bild in die Büchse 28 gedrückt wird. Sobald das als Anschlag dienende Verbindungsstück 24 die Vorderseite 18 des Halteteils 10 erreicht, dreht man die Kugelstange im Uhrzeigersinn aus der Bildebene nach vorne heraus, womit nun der Haltestift den zweiten Nutschenkel 22b durchläuft bis zum Endpunkt bzw. zum Bereich der eigentlichen Verspannposition 22c, wo die Nut 22 sich bevorzugt konisch verjüngt. Zu diesem Zeitpunkt rastet der in der Büchse 28 geführte Verriegelungsbolzen 26 in die außermittige Ausnehmung 16 ein. Diese ist ebenfalls selbstnachstellend ausgebildet, tendiert also dazu, den Schaft im Uhrzeigersinn nachzustellen.

In Fig. 3 ist diese Endstellung in Verriegelungsposition gezeigt. Der Kugelstangenkopf (links) ist nun ebenfalls in Betriebsposition.

Dabei ist, wie auch in Fig. 2, das Halteteil 10 in aufgeschnittener Form dargestellt zur besseren Übersicht.

### Liste der Bezugszeichen

- 10: Halteteil
- 12: Öffnung
- 14: Haltestift
- 16: Außermittige Ausnehmung
- 18: Vorderseite
- 20: Schaft (der Kugelstange)
- 22: Nut
- 22a: Erster Schenkel
- 22b: Zweiter Schenkel
- 22c: Bereich der Verspannposition
- 24: Verbindungsstück
- 26: Verriegelungsbolzen
- 28: Büchse
- 30: Fahrzeugheck-seitiges Anschlußrohr
- 32: Verbindungsblech

## Patentansprüche

1. Abnehmbare Anhängerkupplung, insbesondere für Personenkraftwagen, mit am Fahrzeug bevorzugt verdeckt zu montierendem Halteteil (10) für die lösbare Befestigung des Schaftes (20) einer mit Kupplungskugel versehenen Kugelstange, wobei der Schaft (20) eine Nut (22) aufweist zur Aufnahme eines in der Öffnung (12) des Halteteils (10) befindlichen Haltestiftes (14) und einen parallel zur Schaftachse verschiebbaren Verriegelungsbolzen (26), der beim Verdrehen des eingeführten Schaftes (20) um seine Längsachse unter Federbelastung (vgl. 27) selbständig in eine außermittige Ausnehmung (16) des Halteteils (10) eingreift, dadurch gekennzeichnet, daß
- die Nut (22) Winkelform besitzt mit einem am Schaftende beginnenden, coaxial verlaufenden ersten Schenkel (22a), der in einen sich radial über etwa 60 bis 120° erstreckenden zweiten Schenkel (22b) übergeht, wobei beide Schenkel (22a, 22b) bezüglich Tiefe und Breite auf die Form des Haltestiftes (14) abgestimmt sind;
- der feststehende Haltestift (14) etwa gemäß 30 bis 50% des Radius der Öffnung (12), mind. aber 4 mm, in die Öffnung (12) hineinragt;
- der Verriegelungsbolzen (26) außerhalb des Schaftes (20) verläuft und die Ausnehmung (16) gesondert von der Öffnung (12) vorzugsweise im Bereich der Vorderseite (18) des Halteteils (10) angeordnet ist.

2. Anhängerkupplung nach Anspruch 1, dadurch gekennzeichnet, daß der Verriegelungsbolzen (26) konisch zuläuft, ebenso die Ausnehmung (16), deren Durchmesser zwecks Verspannung so bemessen ist, daß sie vom Bolzen (26) nur teilweise ausgefüllt ist.

3. Anhängerkupplung nach Anspruch 1, dadurch gekennzeichnet, daß der Verriegelungsbolzen (26) konisch zuläuft und die Achse der Ausnehmung (16) oder des Verriegelungsbolzens (26) von der Schaftachse der Konizität des Verriegelungsbolzens (26) entsprechend abweicht.

4. Anhängerkupplung nach einem der Anspruch 1 bis 3, dadurch gekennzeichnet, daß die Breite der Nut (22) den Durchmesser des Haltestiftes (14) überschreitet, ausgenommen im Bereich der Verspannposition (22c).

5. Anhängerkupplung nach Anspruch 4, dadurch gekennzeichnet, daß die Nut (22) im Bereich der Verspannposition (22c) sich konisch zu ihrem Ende hin verjüngt.

6. Anhängerkupplung nach einem der Ansprüche 1 bis 5, dadurch gekennzeichnet, daß der Verriegelungsbolzen (26) in einer mit dem Schaft (20) fest verbundenen Büchse (28) geführt und in seiner Verriegelungsposition gesichert (vgl. 29) ist,

7. Anhängerkupplung nach einem der Ansprüche 1 bis 6, dadurch gekennzeichnet, daß der erste Schenkel (22a) etwa eine (axiale) Länge von 30 bis 40 mm aufweist, und der zweite Schenkel (22b) sich (radial) über etwa 80 bis 100°, vorzugsweise etwa 90° erstreckt.

## Claims

1. Dismountable trailer coupling especially for passenger vehicles with a mounting support (10) to be attached - preferably concealed - to the rear of the vehicle for the releasable attachment of the stem (20) of a coupling rod featuring a coupling ball, the stem (20) featuring a slot (22) to accept a locking pin (14) positioned inside the aperture (12) of the mounting support (10) and a lock bolt (26) movable alongside the stem axis that engages automatically into an eccentric recess (16) of the mounting support (10) when the inserted stem (20) is spring-loaded and turned around its longitudinal axis (cf. 27), characterized in that
- the slot (22) is of angular design with a first coaxial flank (22a) beginning at the stem end, passing over into a second radial flank (22b) sweeping 60 to 120°, both flanks (22a, 22b) being adapted to the shape of the locking pin (14) in their width and depth;
- the rigid locking pin (14) protrudes by about 30 to 50% of the radius of the aperture (12) but by at least 4mm into the aperture;
- the lock bolt (26) is positioned outside the stem (20) and the recess (16) is positioned away from the aperture - preferably in the front area of the mounting support (10).

2. Trailer coupling according to claim 1, characterized in that the lock bolt (26) as well as the recess (16) are of tapering shape, the diametre of the recess being dimensioned so that the bolt (26) fills it only partially, thus creating a restraining force.

3. Trailer coupling according to claim 1, characterized in that the lock bolt (26) is a taper and the axis of the recess (16) or of the lock bolt (26) departs from the stem axis of the taper of the lock bolt (26) accordingly.

4. Trailer coupling according to one of the claims 1 to 3, characterized in that the width of the slot (22) exceeds the diametre of the locking pin (14), except in the area of the staying position (22c).

5. Trailer coupling according to claim 4, characterized in that around the staying position the slot (22) is tapered towards its end.

6. Trailer coupling according to one of the claims 1 to 5, characterized in that the lock bolt (26) is guided in a barrel (28) rigidly mounted on the stem (20), and is secured in its locking position (cf. 29).

7. Trailer coupling according to one of the claims 1 to 6, characterized in that the (axial) length of the first flank (22a) is about 30 to 40 mm, and the second flank (22b) sweeps (radially) about 80 to 100°, preferably about 90°.

## Revendications

1. Attelage de remorque amovible, pour des véhicules de tourisme en particulier, avec un élément de fixation (10) à monter sur le véhicule, masqué de préférence, pour la fixation amovible de la tige (20) d'une barre d'attelage munie d'une rotule d'accouplement, la tige (20) présentant une rainure (22) pour recevoir une goupille de fixation (14), située dans l'ouverture (12) de l'élément de fixation (10), et un axe de verrouillage (26), mobile à la parallèle de l'axe de la tige et qui s'engage spontanément par charge de ressort (voir 27), lors de la rotation de la tige (20), introduite, autour de son axe longitudinal, dans un évidement (16) excentré de l'élément de fixation (10), caractérisé en ce que
- la rainure (22) présente une forme angulaire avec une première branche (22a) coaxiale, qui commence sur l'extrémité de la tige et se prolonge par une seconde branche (22b), qui s'étend dans le sens radial sur un angle de 60 à 120° environ, les deux branches (22a, 22b) étant adaptées, quant à leur profondeur et à leur largeur, à la forme de la goupille de fixation (14),
- la goupille de fixation (14) stationnaire pénètre dans l'ouverture (12) sur une longueur correspondante à 30 - 50% environ du rayon de l'ouverture (12), mais de 4 mm au moins,
- l'axe de verrouillage (26) se situe à l'extérieur de la tige (20), l'évidement (16) étant disposé à part de l'ouverture (12), de préférence dans la zone de la face avant (18) de l'élément de fixation (10).

2. Attelage de remorque suivant la revendication 1, caractérisé en ce que l'axe de verrouillage (26) se termine en cône, de même que l'évidement (16), dont le diamètre est dimensionné en vue du serrage de sorte qu'il n'est que partiellement rempli par l'axe (26).

3. Attelage de remorque suivant la revendication 1, caractérisé en ce que l'axe de verrouillage (26) se termine en cône, l'axe de l'évidement (16) ou de l'axe de verrouillage (26) divergeant de l'axe de la tige conformément à la conicité de l'axe de verrouillage (26).

4. Attelage de remorque suivant l'une des revendications 1 à 3, caractérisé en ce que la largeur de la rainure (22) est supérieure au diamètre de la goupille de fixation (14), sauf dans la zone de l'emplacement de serrage (22c).

5. Attelage de remorque suivant la revendication 4, caractérisé en ce que la rainure (22) se rétrécit en cône en direction de son extrémité dans la zone de l'emplacement de serrage (22c).

6. Attelage de remorque suivant l'une des revendications 1 à 5, caractérisé en ce que l'axe de verrouillage (26) est guidé dans une douille (28), assemblée fixement avec la tige (20), et est bloqué dans sa position de verrouillage (voir 29).

7. Attelage de remorque suivant l'une des revendications 1 à 6, caractérisé en ce que la première branche (22a) présente une longueur (axiale) de 30 à 40 mm environ, la seconde branche (22b) s'étendant (dans le sens radial) sur un angle de 80 à 100° environ, de 90° environ de préférence.
